# EUROPEAN PATENT APPLICATION

(11) **EP 1 361 404 A2**
(43) Date of publication of application: **12.11.2003**
(21) Application number: 03445053.6
(22) Date of filing: 05.05.2003
(51) Int. Cl.: F28D 20/00

(54) **An accumulator tank**

(30) Priority: 06.05.2002 SE 0201361
(71) Applicant: Instchemas AB, 176 70 Järfälla (SE)
(72) Inventor: Eyem, Julius, SE - 176 70 Järfälla (SE)
(74) Representative: Israelsson, Stefan

(57) **Abstract**

The present invention relates to an accumulator tank (1) filled with particles (2) which comprise a shell and a liquid encased by said shell. Advantageously, the accumulator tank (1) is comprised in en solar collector construction with a circulating heat carrying medium arranged to flow through the accumulator tank (1).

## Description

### BACKGROUND OF THE INVENTION AND PRIOR ART

The present invention relates to an accumulator tank.

An effective use of solar energy, which may be collected in solar collectors such as solar cells or solar panels, for the heating of buildings and hot-water, requires the use of a heat carrying system comprising an accumulator tank. A direct heating of buildings and hot-water is only possible if the water temperature in the tank exceeds about 40°C. However, the solar collectors can, during the spring and the autumn, supply sufficient energy/day also at the 60 degree of latitude. However, the temperature of the water in the accumulator tank is here too low for it to directly be able to be used for heating purposes. An accumulator tank requires a large volume in order for the accumulated solar heat during sunny days to last during cloudy days. It requires, for example, an accumulator tank having a volume of at least 8 m³ (calculated on an average consumption of 60 kWh/24 h if the water temperature in the accumulator tank is 40-60°C).

### SUMMARY OF THE INVENTION

The object of the present invention is to provide an accumulator tank having a considerably higher storage capacity than a conventional accumulator tank.

This object is achieved with the initially mentioned accumulator tank which is characterised in that the accumulator tank is filled with particles which comprise a shell and a liquid encased by said shell. The heat content in an accumulator tank increases dramatically if also the heat, which is released during the freezing of liquids or the condensation of vapours, can be used. For example, 1 m³ water releases 93 kWh heat if it is crystallized to ice. The volume of the accumulator tank may thereby be reduced 5-7 times if this heat is used.

Said solid particles may be tightly packed in the accumulator tank or are loosely floating in a heat carrying medium in the accumulator tank. Advantageously, the liquid in the solid particles is water, which thus freezes at 0°C. In order to facilitate the freezing, the water may contain crystallization grains (small solid porous particles having a diameter less than 0.1 mm). The water may also contain a water-soluble pigment and it may be saturated with an inert gas (for example nitrogen or carbon dioxide). Said shell comprises an impermeable casing and may comprise a metal or a plastic material. The particles may have the shape of balls, cylinders or any other suitable three-dimensional shape.

According to a preferred embodiment of the present invention, the accumulator tank is comprised in a heat transferring system with a heat carrying medium arranged to flow through the accumulator tank. Advantageously, said heat transferring system comprises a solar collector. A heat carrying medium, which has been heated by a solar collector, may be used for direct heating of buildings/water or may be stored in the accumulator tank. Advantageously, said heat transferring system comprises a heat pump. When the temperature of the heat carrier is not sufficient for direct heating, the heat pump may be used.

### BRIEF DESCRIPTION OF THE DRAWING

In the following, a preferred embodiment of the present invention is described as an example with references to the attached drawing, in which:

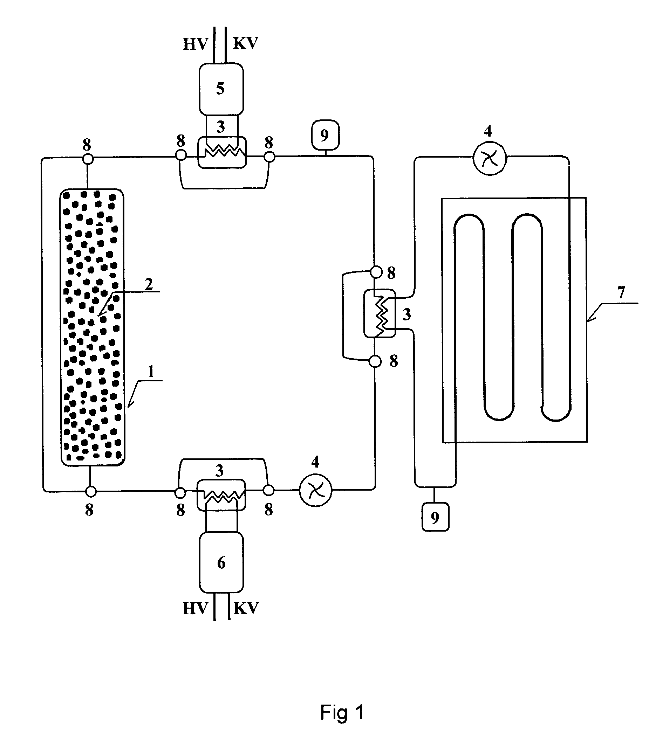

- Fig 1: shows a solar collector construction with an accumulator tank according to the present invention.

### DETAILED DESCRIPTION OF A PREFERRED EMBODIMENT OF THE PRESENT INVENTION

Fig. 1 shows a solar collector construction, which uses an accumulator tank 1 containing particles 2. The particles 2 have a metal or a plastic shell encasing a liquid. Preferably, the particles have a diameter from 1 mm to 10 mm. The liquid inside the particles 2 constitutes a stationary liquid. In order to retain the particles 2 in the accumulator tank 1, they may be so closely packed together that they are guaranteed to be retained in a stationary position in the accumulator tank 1. A heat carrying liquid medium, which has to have a lower freezing point than 0°C, flows between the particles 2 in the accumulator tank 1, and transfers heat to and from the stationary liquid in the particles 2. Advantageously, in order to make sure that the particles do not leave the accumulator tank 1, a sieve-formed member such as a net or the like is arranged at the inlet and/or the outlet of the liquid medium in the accumulator tank 1. The sieve-formed member comprises openings having a size allowing the liquid medium to pass but preventing said particles 2 to pass. The particles 2 make it possible to use the crystallization heat of water to energy accumulation without that the circulation of the heat carrying medium stops at the freezing point. The crystallization heat of water is about 80 times larger than the increase of the heat content of water when it is heated 1°C (1.2 Wh/°C/kg for water). This means, that the capacity of the accumulator tank 1 is about 5-7 times larger than the capacity of a conventional accumulator tank filled with water. Furthermore, the solar collector construction comprises a heat pump 5 by means of which the heat in the circulating medium may be used, which is supplied by a solar collector 7 during the cold part of the year. The position of the heat exchangers 3 with by-pass ducts outside the accumulator tank 1 makes an effective use of direct and accumulated heat possible.

However, three problems have to be solved before accumulated energy may be used practically according to the above:
1. The water temperature is only 0°C at the freezing point;
2. Heat accumulation in tanks is effected conventionally by circulation of the heat carrying medium between the solar collector and a built-in heating loop in the accumulator tank. The heat consumption takes place through by another loop in the accumulator tank. If water in the accumulator tank or in the tubes freezes to ice because of an over-withdrawal of heat, the water circulation in the heat loop stops and thereby, an effective heat exchange.
3. Water expands during freezing. An accumulator tank or tubes with heat carriers may crack if all the water is transformed into ice.

The problem 1 may be solved by a heat pump 5 for extracting heat energy from the heat carrying medium also when it has a temperature around 0°C.
The solution of the problems 2 - 3 is mainly the object of the following patent application:
The solar collector construction consists of four main parts:
   a. Solar collector 7;
   b. Accumulator tank 1 filled with solid particles 2 with liquid, which thereby forms a here called stationary liquid;
   c. Heat consumers (heat pump 5 and water heater 6);
   d. A number of heat exchangers 3 with change-over valves 8 and by-pass ducts.

The particles 2 comprise a shell of a solid, watertight material. The liquid, which is encased by the particles 2, may consist of water with possible additives. The heat carrying circulating liquid-formed medium may contain water with additives which decrease the freezing point to about -10°C. All heat transfer outside the accumulator tank 1 is effected via external heat exchangers 3. If the heat consumption in the solar collector construction causes a fall in the temperature of the heat carrying circulating medium below the freezing point for the stationary liquid in the particles 2, crystallization heat is released without that the circulation of the heat carrying medium stops. At a following heat supply, the water in the stationary liquid melts and accumulates heat from the circulating medium. The change-over valves 8 allow a variable engagement of the heat source, i.e. the solar collector. 7 and the heat consumers i.e. the heat pump 5 and the water heater 6 in order to allow for a maximum of use of the solar energy for:
a. Direct heating of buildings/hot-water in the water heater 6 when the solar collector 7 gives the circulating medium a temperature exceeding 40°C;
b. The heating of buildings, via heat pump 5, when the temperature of the circulating medium and the stationary liquid in the accumulator tank 1 is between 0°C and 40°C;
c. A traditional heating of buildings when the temperature in the stationary liquid in the accumulator tank falls bellow 0°C.

The references in Fig. 1 show.
1. Accumulator tank.
2. Solid particles, containing so-called stationary liquid.
3. Heat exchangers.
4. Circulation pump.
5. Heat pump.
6. Water heater.
7. Solar collector.
8. Three way valve.
9. Expansion vessel.
CW= cold-water.
HW= hot-water.

The invention is not restricted to the described embodiment but may be modified freely within the scopes of the claims. Consequently, the accumulator tank 1 is not restricted to be used in a solar collector construction but it may be used in a substantially arbitrary context.

## Claims

1. An accumulator tank, **characterised in that** the accumulator tank (1) is filled with particles (2), which comprise a shell and a liquid encased by said shell.

2. An accumulator tank according to claim 1, **characterised in that** said particles (2) are tightly packed in the accumulator tank (1).

3. An accumulator tank according to claim 1, **characterised in that** said particles (2) are loosely floating in a heat carrying medium in the accumulator tank (1).

4. An accumulator tank according to any one of the preceding claims, **characterised in that** the liquid in the particles (2) comprises water.

5. An accumulator tank according to any one of the preceding claims, **characterised in that** the liquid in the particles (2) comprises crystallization grains.

6. An accumulator tank according to any one of the preceding claims, **characterised in that** the liquid in the particles (2) is saturated with an inert gas.

7. An accumulator tank according to any one of the preceding claims, **characterised in that** the shell of the particles (2) comprises a metal or plastic material.

8. An accumulator tank according to any one of the preceding claims, **characterised in that** it is comprised in a heat transferring system with a circulating heat carrying medium arranged to flow through the accumulator tank (1).

9. An accumulator tank according to any one of the preceding claims, **characterised in that** said heat transferring system comprises a solar collector (7).

10. An accumulator tank according to claim 8 or 9, **characterised in that** said heat transferring system comprises a heat pump (5).
